# EUROPEAN PATENT APPLICATION

(11) **EP 2 116 839 A1**
(43) Date of publication of application: **11.11.2009**
(21) Application number: 08156015.3
(22) Date of filing: 09.05.2008
(51) Int. Cl.: G01N 21/55, C08G 77/00, G02B 1/10

(54) **Device for multiple ATR analysis**

(71) Applicant: Université Catholique de Louvain, 1348 Louvain-la-Neuve (BE); Université Libre de Bruxelles, 1050 Bruxelles (BE); Universite De Mons Hainaut, 7000 Mons (BE)
(72) Inventor: Marchand, Jacqueline, B-6001 Marcinelle (BE); Devouge, Sabrina, B-7110 Strepy-Bracquegnies (BE); De Coninck, Joël, B-7022 Mesvin (BE); Voue, Michel, B-5530 Yvoir (BE); Conti, Joséphine, B-7040 Aulnois (BE); Homble, Fabrice, B-1440 Braîne-le-Château (BE); Goormaghtigh, Erik, B-7850 Enghien (BE); Goldsztein, Andréa, B-1180 Bruxelles (BE)
(74) Representative: Brants, Johan P.E.

(57) **Abstract**

The invention relates generally to a device suitable for the investigation of ligand-receptor interactions by attenuated total reflection (ATR) spectroscopy, comprising an ATR element, transparent in the infrared, wherein at least one surface of said ATR element is provided with a sample compartment comprising at least two chambers, wherein each chamber is in direct communication with at least part of said ATR element surface. The invention also relates to a method for analyzing several samples in parallel and to the use of the device for the analysis of at least two samples. The invention also relates to a compound useful for the grafting of an ATR element and a method to prepare said compound.

## Description

### Field of the invention

The present invention relates to a device suitable for the investigation of ligand-receptor interactions by attenuated total reflection (ATR) spectroscopy. The invention also relates to a method for analyzing several samples in parallel and to the use of the device for the analysis of at least two samples. The invention also relates to a compound useful for the grafting of ATR element and a method to prepare said compound.

### Background of the invention

Attenuated total reflection Fourier transform infrared spectroscopy (ATR-FTIR) is one of the most powerful methods for recording infrared spectra of biological materials in general and of biological molecules in particular. In ATR, the infrared beam is directed into a high refractive index medium (attenuated total reflection element, ATR element) which is transparent for the IR radiation of interest. Above a critical angle the beam is completely reflected when it impinges on the surface of the internal reflection element. An electromagnetic disturbance also exists in the rarer medium beyond the reflecting interface where the sample is placed. This so-called evanescent electric field intensity falls exponentially with the distance from the interface.

The method is fast, yields a strong signal with only a few nanograms of sample, and most importantly, it allows information about the structure and the orientation of various parts of the molecules under study to be evaluated in an oriented system. The ATR technique alleviates the problem of water absorbance in the mid IR as the sensor is built on a very thin layer that is sensed by the evanescent field while the bulk of the solvent is not.

ATR-FTIR is now used to build biosensors. Biological receptors are immobilized onto the ATR element interface. Potential ligands present in the bulk of the solution do not contribute significantly to the spectrum as they largely stay out of reach of the evanescent wave. Upon binding onto receptors immobilized on the ATR element surface they enter the domain close to the interface where the evanescent wave is intense and yield a strong IR signal. In addition to the usual sensor response, one of its advantages consists in the fingerprint response that allows a unique identification of the bound ligand. Another interesting feature of the IR detection is that it allows the concentrations to be determined from the molar integrated extinction coefficients.

With the increasing number of samples to analyze, there is a need for competitive biosensor suitable for multiple analyses. So far, the requirements of the optics alignment prevent the ATR element to be moved with respect of the IR beam and therefore do not allow the processing and analysis of more than one sample per experiment.

EP 1,806,574 and WO 02/056018 describes device made of ATR element suitable for the investigation of ligand-receptor interactions. However, only one sample can be analyzed on said device.

It is an object of the invention to circumvent the above-mentioned problem and to provide a device useful for ATR measurement and allowing multiple analyses.

As previously described, ATR-FTIR spectroscopy is a powerful analytical technique, particularly well adapted to the characterization of organic molecules, biological systems, and their interactions occurring at the surface of the optical element. Most used ATR crystals are made of silicon; the material is quite inexpensive and the surface chemistry of silicon has been widely described. However, the surface of the ATR crystals is prone to hydrolysis, and lowering the degradation, i.e. hydrolysis under physiological conditions, of the ATR surface is still challenging. It is another object of the invention to provide an organic molecule able to stabilize the ATR surface towards hydrolysis and therefore circumvent the above-mentioned problem.

### Summary of the invention

In a first aspect, the present invention provides a device suitable for the investigation of ligand-receptor interactions comprising an ATR element, transparent in the infrared,
wherein at least one surface of said ATR element is provided with a sample compartment comprising at least two chambers, wherein each chamber is in direct communication with at least part of said ATR element surface.

The present invention also provides a method for manufacturing a device according to the invention comprising the steps of: providing an ATR element transparent in infrared, disposing on at least one surface of said ATR element a sample compartment comprising at least two chambers, and sealing the ATR element and the sample compartment together.

The present invention also provides for the use of said device for the analysis of at least two samples.

The present invention also provides a method for analyzing at least two analytical samples by attenuated total internal reflection in FTIR configuration comprising the steps of:
(a) providing a device according to the invention, comprising an ATR element, transparent in the infrared, wherein at least one surface of said ATR element is provided with a sample compartment comprising at least two chambers, wherein each chamber is in direct communication with at least part of said ATR element surface,
(b) filling each chambers with a sample to analyze,
(c) providing an infrared beam onto the surface of the ATR element in communication with the first chamber,
(d) detecting the reflected IR beam obtained,
(e) moving the device such that the surface of the ATR element in communication with the second chamber is in front of the infrared beam and repeating steps (c) to (e) until the last sample.

In a second aspect, the present invention also provides an organic layer able to stabilize the ATR surface from hydrolysis. In particular, an organic layer made a compound of Formula I. In particular, the present invention provides a compound of Formula I, suitable for the grafting of an ATR element, wherein

(R⁵O)₃Si-(CH₂)_{w}-L-(CH₂CH₂O)_{z}-CH₃ I

R⁵ is a C₁₋₆alkyl, L is selected from -NHC(O)O-, -NHC(S)O-, -OC(O)NH-, -OC(S)NH-, -C(O)NH-, -C(S)NH-, -NHC(O)NH-, or -NHC(S)NH-, w is an integer selected from 1 to 10 and z is an integer selected from 1 to 20.

The present invention also provides a method for preparing a compound of Formula I comprising the step of: reacting a compound of general formula HY²-(CH₂CH₂O)_{z}-Me wherein Y² is selected from -O-, -S-, -NH-, -C(O)O-, -C(S)O-, -C(O)NH-, -C(S)NH- and z is an integer selected from 1 to 20, with a compound of general formula (R⁵O)₃Si-(CH₂)_{w}-Y¹ wherein R⁵ is a C₁₋₆alkyl, w is an integer selected from 1 to 10 and Y¹ is selected from CH=CH₂, C≡CH, CN, CH=O, epoxide, halogen, SH, NH₂, OH, N=C=O, N=C=S, CO₂H or derived esters thereof, thereby obtaining a compound of Formula I.

The invention also provides a method for manufacturing a grafted ATR element comprising the steps of: providing an ATR element, and reacting (covalently grafting) at least part of the surface of said ATR element with a compound of general Formula I.

The invention also provides the use a compound of general Formula I for the grafting of an ATR element, and the use of said grafted ATR element for the study of ligand-receptor interactions.

The present invention will be further disclosed in detail hereunder wherein preferred embodiments of the device of the present invention are disclosed in details. The description is only given by way of example and does not limit the invention. The reference numbers relate to the hereto-annexed figures.

### Brief description of the figures

Figure 1 represents a schematic view of a device according to an embodiment of the invention.
Figure 2 represents a perspective view of a device according to an embodiment of the invention.
Figure 3 represents a cross-sectional view of a device according to an embodiment of the invention.
Figure 4 represents a graph plotting the results of the analysis of three samples using a device according to an embodiment of the invention.
Figure 5 represents graphs plotting the absorbance of FVIII on membrane fragments on a single lane multiple reflection internal reflection element (IRE) (A: silicon, B: germanium) and on a multiple lane single reflection IRE (C: germanium).
Figure 6 represents graphs plotting the absorbance of a compound grafted on an ATR element according to an embodiment of the invention under physiological conditions.
Figure 7 represents graphs plotting the absorbance of a receptor bonded to a compound grafted on an ATR element according to an embodiment of the invention.

### Detailed description of the invention

The present invention concerns a device suitable for the investigation of ligand-receptor interactions comprising an ATR element, transparent in the infrared, wherein one surface of said ATR element is provided with a sample compartment comprising at least two chambers, wherein each chamber is in direct communication with at least part of said ATR element surface.

As used in the specification and the appended claims, the singular forms "a", "an," and "the" include plural referents unless the context clearly dictates otherwise. By way of example, "an alkene" means one alkene or more than one alkene.

In a particular embodiment, at least one surface of the ATR element in direct communication with the chamber is chemically activated by oxidation, hydroxylation or reduction in acid or alkaline environment and covalently grafted with an organic molecule able to immobilize a receptor.

Suitable methods for activating the surface of an ATR element can be methods as disclosed for example in WO 02/056018.

The device of the present invention has the advantage of providing a sample holder or sample compartment, comprising at least two chambers.

In a particular embodiment, the sample compartment can comprise from 2 to 96 chambers. Preferably, the sample compartment comprises from 2 to 50 chambers, more preferably from 5 to 20 chambers, and even more preferably the sample compartment comprises 2, 3, 4, 5, 6, 7, 8, 9, 10, 11, 12, 13, 14, 15, 16, 17, 18, 19 or 20 chambers.

In an embodiment, each chamber of the sample compartment comprises an inlet suitable for the supply and the removal of a sample. In a preferred embodiment, each chamber comprises an inlet for the supply of a sample and an outlet for the removal of said sample. The inlet and optional outlet of said chambers can also be optionally provided with one or more tubing suitable for supplying within said chamber the analytical sample to analyze. The analytical sample can be added manually or automatically to the chamber through the inlet by means of manual or automatic sampling devices such as pipettes, pipette tips, pumps, injection loop and the like.

In one embodiment, the upper surface of the chambers is a corrugated or a rough surface. Corrugation of the surface can be (pseudo)random or organized. As used herein the term "corrugated surface" also encompasses uneven, wavy, grooved, ridged, or ribbed surface. For example if more than one chemical compounds is added to the chamber, the corrugated or rough upper surface of said chamber will enhance the turbulence or the mixing of said chemical compounds.

The chamber can have any suitable shape. The chamber can have an oval shape, a rectangular shape or a rounded rectangular shape. In a preferred embodiment said chamber is rectangular or rounded rectangular.

In one embodiment, the height of the chamber is comprised between 0.2 mm and 0.7 mm, preferably between 0.3 mm and 0.6 mm, and more preferably is 0.3, 0.35, 0.4, 0.45, 0.5, 0.55 or 0.6 mm. In another embodiment, the width of the chamber is comprised between 0.5 mm and 3 mm, preferably between 0.5 mm and 1 mm, and more preferably is 0.5, 0.6, 0.7, 0.8, 0.9 or 1 mm. In another embodiment, the length of the chamber is comprised between 2 mm and 10 mm, preferably between 2 mm and 7 mm, and more preferably is 2, 3, 4, 5, 6, or 7 mm. For example, said chamber may have a height between 0.7 and 0.2 mm, a width between 3 mm and 0.5 mm and a length between 10 mm and 2 mm. Preferably said chamber can have a height of 0.4 mm, a width of 0.5 mm and a length of 3 mm.

The chambers are preferably made of a material that does not react with the samples to be analyzed, at the time scale of the suitable experiment. The chamber can be made of glass or can be made of a polymer selected from the group consisting of: polycarbonate, polypropylene, polyethylene, polyethylenetherephtalate, polymethylmetacrylate, copolymers of polyolefin, copolymers of cyclic and non-cyclic olefins, and copolymers of linear and cyclic olefins or mixture thereof. Preferably, the chamber is made of polycarbonate, polypropylene, copolymers of polyolefin, copolymers of cyclic and non-cyclic olefins or copolymers of linear and cyclic olefins. For example, the chamber can be made of a copolymer of linear and cyclic olefins such as TOPAS®. More preferably, the chamber is made of polycarbonate or polypropylene. Optionally this material can be transparent to allow a visual control of the sample flow through the chambers. This material can also be hydrophobic to minimize the liquid/chamber interactions.

In one embodiment, the ATR element is made of a material selected from the group consisting of silicon, germanium, ZnS, ZnSe, or diamond. Preferably, the ATR element is made of germanium or silicon and more preferably the ATR element is made of germanium.

In another embodiment, the ATR element can have any shape as long as it allows internal reflection of a radiation within said ATR element. Preferably, the ATR element is a crystal having a trapezoidal, hemi-cylindrical, rectangular or triangular polyhedral form, rectangular prism, or a triangular prism (prism with triangular basis). More preferably, the ATR element is a triangular prism with a right triangular basis (also called right-angled triangle or rectangled triangle). More preferably, the ATR element is a triangular prism with 45-45-90 triangle basis (right triangle with the two other angles at 45°).

The sample compartment or the chambers are preferably sealed to the ATR element. The sealing can be optionally achieved with O-rings or alternatively, with a continuous flat seal, having suitable openings or cut-outs to allow the sample to come in contact with the ATR element. This sealing layer can be separate or can be integrated to the flow chambers, for example, by coating methods or double component injection methods.

In an embodiment, at least part of said ATR element surface is provided with an organic molecule covalently grafted thereon. Said organic molecule is preferably able to immobilize a receptor.

In an embodiment, said organic molecule is selected from the group comprising CH≡CR¹, CH₂=CHR¹, X₃Si-(CH₂)_{q}-(CF₂)ₛ-Y, X₂(R³)Si-(CH₂)_{q}-(CF₂)ₛ-Y ; X(R³)(R⁴)Si-(CH₂)_{q}-(CF₂)ₛ-Y ; or (R⁵O)₃Si-(CH₂)_{w}-L-(CH₂CH₂O)_{z}-CH₃; wherein

R¹ is selected from CₙH₂ₙ₊₁, CₙF₂ₙ₊₁, -(CH₂)ₘ-(O-CH₂-CH₂)ₚ-OR², wherein R² is selected from C₁₋₄alkyl, C₁₋₆alkylarylsulfoxide, heteroaryloxycarbonylC₁₋₆alkyl, 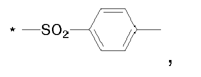 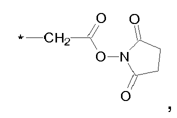 or mixture thereof,
n is an integer from 3 to 50,
m is an integer from 0 to 20,
p is an integer from 3 to 20;
X is halogen or C₁-₆alkoxy;
q is an integer selected from 1 to 20;
s is an integer selected from 0 to 20;
R³ and R⁴ are each independently C₁₋₆alkyl;
Y is Me, CF₃, CHF₂, CH₂F, CH=CH₂, CN, CH=O, epoxide, halogen, SH, NH₂, OH, N=C=O, N=C=S, CO₂H or derived esters thereof,

R⁵ is a C₁₋₆alkyl, L is selected from -NHC(O)O-, -NHC(S)O-, -OC(O)NH-, -OC(S)NH-, -C(O)NH-, -C(S)NH-, -NHC(O)NH-, or -NHC(S)NH-, w is an integer selected from 1 to 10 and z is an integer selected from 1 to 20.

As used herein, the term "alkyl" by itself or as part of another substituent, refers to a straight or branched saturated hydrocarbon group joined by single carbon-carbon bonds having 1 to 10 carbon atoms, for example 1 to 8 carbon atoms, for example 1 to 6 carbon atoms or for example 1 to 4 carbon atoms. When a subscript is used herein following a carbon atom, the subscript refers to the number of carbon atoms that the named group may contain. Thus, for example, C₁₋₄alkyl means an alkyl of one to four carbon atoms. Examples of alkyl groups are methyl, ethyl, propyl, isopropyl, butyl, isobutyl, *sec*-butyl, *tert*-butyl, 2-methylbutyl, pentyl iso-amyl and its isomers, hexyl and its isomers, heptyl and its isomers and octyl and its isomers. Where alkyl groups as defined are divalent, i.e., with two single bonds for attachment to two other groups, they are termed "alkylene" groups. Non-limiting examples of alkylene groups includes methylene, ethylene, methylmethylene, trimethylene, propylene, tetramethylene, ethylethylene, 1,2-dimethylethylene, pentamethylene and hexamethylene.

The term "aryl" as used herein by itself or as part of another group refers but is not limited to 5 to 14 carbon-atom homocyclic (i.e., hydrocarbon) monocyclic, bicyclic or tricyclic aromatic rings or ring systems containing 1 to 4 rings which are fused together or linked covalently, typically containing 5 to 8 atoms; at least one of which is aromatic. Where aryl groups as defined are divalent, i.e., with two single bonds for attachment to two other groups, they are termed "arylene" groups.

The term "amino" refers to the group -NH₂.

The term "halo" or "halogen" as a group or part of a group is generic for fluoro, chloro, bromo or iodo.

The term "epoxy" or "epoxide" as used herein refers to cyclic ether with only three ring atoms.

The term "C₁₋₆alkylarylsulfoxide" as used herein refers to a compound with a C₁₋₆alkyl moiety, an aryl moiety and a group of general formula -SO₂.

The term "heteroaryl" as used herein refers to a group of five to about a 14-membered aromatic monocyclic or multicyclic hydrocarbon ring system, including fused and spiro rings, in which one or more of the elements in the ring system is an element other than carbon and is selected from nitrogen, oxygen, silicon, or sulphur and wherein an N atom may be in the form of an N-oxide.

The term "heteroaryloxycarbonylC₁₋₆alkyl" as used herein refers to a group of general formula heteroaryl-OC (O)-C₁₋₆alkyl group where R is a C₁₋₆alkyl is a group as previously described heteroaryl group as previously described.

The term "C₁-₆alkoxy" as used herein refers to a group of general formula -O-C₁₋₆alkyl.

The term "thio" as used herein refers to the -SH group.

The term "isocyano" as used herein refers to the group of formula -N=C=O.

The term "isothiocyano" as used herein refers to a group of formula -N=C=S.

In an embodiment, the organic molecule can be optionally covalently coupled with a multifunctional arm-spacer of the general formula
Z¹-(CH₂)ₜ-Z² wherein t is an integer selected from 2 to 12; or
Z¹-CH₂-(O-CH₂-CH₂)ᵤ-OCH₂-Z² wherein u is an integer selected from 0 to 5;
wherein Z¹, Z² are each independently selected from N₃₋aryl-; diazirinyl; -CO₂H and N-hydroxysuccinimidyl ester thereof; -CH₂-NH₂ and N-maleimidyl derivative thereof; -CH₂OH and tosylates thereof; -CH₂-SH and dithiane derivatives thereof; -CH₂-N=C=O; -CH₂N=C=S;

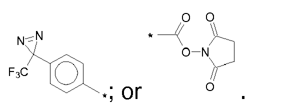

In an embodiment, the organic molecule is covalently coupled with a multifunctional arm-spacer as described above.

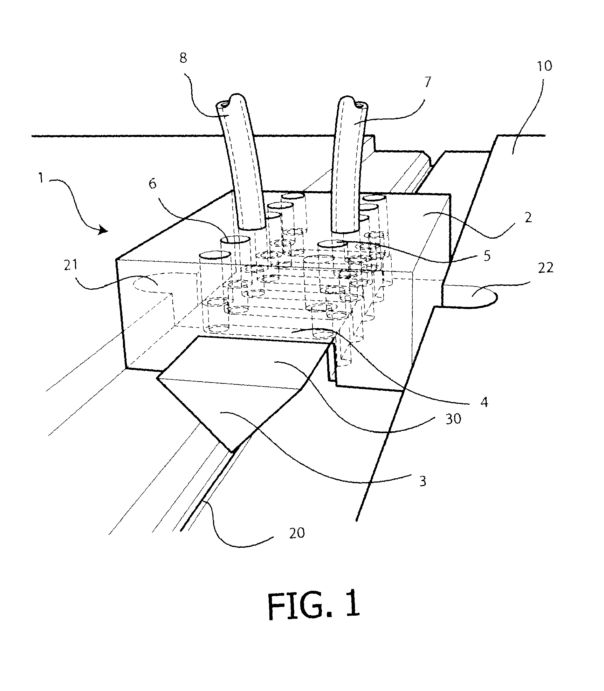

With reference to figure 1, a device according to an embodiment of the invention is shown disposed on ATR-FTIR equipment suitable for this kind of measurement. Said device 1 comprises an ATR element 3 wherein one surface 30 of said ATR element is provided with a sample compartment 2 comprising several chambers 4. It will be understood that while the sample compartment 2 is illustrated with six chambers 4, said compartment may be equipped with less or more chambers, such as from 2 to 96 chambers, for example 2 to 50 chambers, for example 6 chambers, 10 chambers, 15 chambers or 20 chambers. Part of the surface 30 the ATR element 3, is in direct communication with each chamber 4, thereby forming a sample container and provides therefore separate sampling and analysis surfaces. The chambers 4 or compartment 2 can be sealed on the surface 30 of the ATR element 3 for example with O-rings (not shown). Each chamber 4 is provided with an inlet 6 and an outlet 5. It will be understood that while the chambers are illustrated with one inlet and one outlet, said chambers may be equipped with less or more inlets, such as one, two or three inlets/outlets. The analytical sample can be added to the chamber 4 via the inlet 6 optionally via a tubing 8 which can be equipped with a pump. For example, the tubing can be equipped with a pump and an injection loop. The analytical sample can also be added with other instrument such as pipettes. The analytical sample can be removed from the chamber 4 via the outlet 5 optionally via a tubing 7 which can be equipped with a pump. The analytical sample can also be removed with other instrument such as pipettes. In the embodiment presently illustrated, the ATR element 3 of the device 1 is disposed on a rail 20 allowing the device 1 to move along said rail 20 either manually or automatically. Said rail 20 allows the disposition and docking of each chamber 4 in front of the infrared beam. The place, where measurements take place, is shown with the two slots 21 and 22.

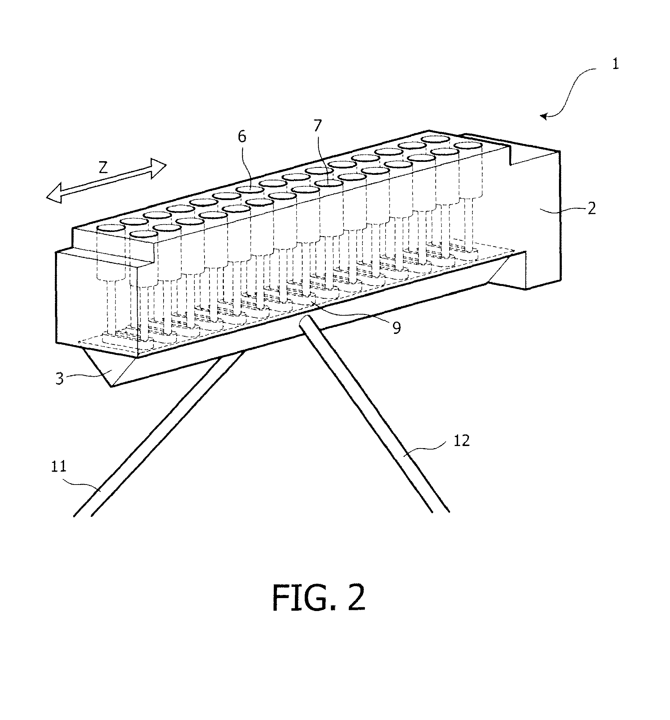

With reference to figure 2, a device according to an embodiment of the invention is illustrated. For clarity, all equipments not essential to the understanding of the present invention have been deleted. The device 1 comprises an ATR element 3 wherein one surface of said ATR element is provided with a sample compartment 2 comprising in this embodiment fifteen chambers 4. Parts of the surface of the ATR element are in direct communication with each of the chambers 4 and define sample analysis lanes. The chambers 4 or compartment 2 can be sealed on the surface 30 of the ATR element with O-rings 9. The chamber 4 is provided with inlet 6 and outlet 5. The analytical sample can be added to chamber 4 via inlet 6 and removed from said chamber 4 via outlet 5. The device can be moved along the z-direction to present the different lines (element surface in each sample) in the optical path of the IR beam 11. In use, the device is moved such that the sampling surface of each chamber 4 is subjected to infrared (IR) beam 11. The IR beam 11 passes through the ATR crystal in such a way that it reflects at least once off the internal surface in contact with the sample. This reflection forms the evanescent wave which extends into the sample, typically by a few micrometers. The beam 12 is then collected by a detector as it exits the crystal.

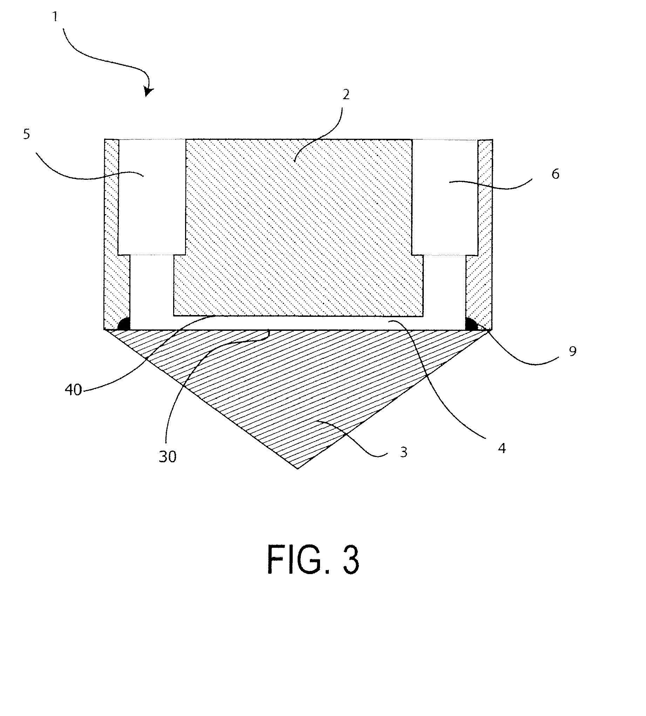

With reference of figure 3, a cross-sectional view of a device according to an embodiment of the invention is illustrated. The device 1 comprises an ATR element 3, wherein one surface 30 of said ATR element is provided with a sample compartment 2 comprising at least two chambers 4 (not shown, only one chamber is shown) in direct communication with the surface 30 of the ATR element 3. The chamber 4 comprises an inlet 6 and an outlet 5. The chamber 4 can be sealed on the surface 30 of the ATR element 3 with O-rings 9.

The upper surface of the chambers 40 can be smooth or can be corrugated or rough.

The present invention also provides a method for manufacturing a device according to the invention comprising the steps of:
- providing an ATR element transparent in the infrared,
- disposing on at least one surface of said ATR element a sample compartment comprising at least two chambers, and
- sealing the ATR element and the sample compartment together.

In one embodiment, the invention provides a method for manufacturing the device according to the present invention, wherein one surface of said ATR element is provided with a sample compartment comprising at least two chambers, wherein each chamber is in direct communication with said ATR surface.

In an embodiment, the method comprises the step of: prior to assembling said sample compartment to said ATR element, chemically activating at least part of said surface by oxidation, hydroxylation or reduction in acid or alkaline environment and covalently grafting on said chemically activated surface an organic molecule as described above. In an embodiment, said organic molecule is selected from the group comprising CH≡CR¹, CH₂=CHR¹, X₃Si-(CH₂)_{q}-(CF₂)ₛ-Y, X₂(R³)Si-(CH₂)_{q}-(CF₂)ₛ-Y ; X(R³)(R⁴)Si-(CH₂)_{q}-(CF₂)ₛ-Y ; or (R⁵O)₃Si-(CH₂)_{w}-L-(CH₂CH₂O)_{z}-CH₃, wherein R¹, X, q, s, Y, R³, R⁴, R⁵, L, w and z have the same meaning as that defined above. In an embodiment, said organic molecule can be optionally further covalently coupled with a multifunctional arm-spacer as described herein above.

The present invention also concerns the use of a device according to the present invention for the analysis of at least two samples. The device is therefore useful for holding and analysis from 2 to 96 samples, in one experiment, preferably from 2 to 50 samples, more preferably from 5 to 20 samples, or even more preferably of 2, 3, 4, 5, 6, 7, 8, 9, 10, 11, 12, 13, 14, 15, 16, 17, 18, 19, 20, or 50 samples.

The present invention also concerns a method for the analysis at least two analytical samples by attenuated total internal reflection in FTIR configuration comprising the steps of:
a. providing a device according to the invention comprising an ATR element, transparent in the infrared, wherein at least one surface of said ATR element is provided with a sample compartment comprising at least two chambers, wherein each chamber is in direct communication with at least part of said ATR element surface, thereby providing for a measurement surface for contact with a sample and for directing an IR beam against said sample,
b. supplying each chamber with a sample to analyze,
c. providing an infrared beam onto the surface of the ATR element in communication with the first chamber,
d. detecting the reflected IR beam obtained,
e. moving the device such that the surface of the ATR element in communication with the second chamber is in front of the infrared beam and repeating steps c) to e) until the last sample.

Each step (a) to (e) of the method for analyzing at least two analytical samples by attenuated total internal reflection in FTIR configuration can be randomly performed.

The present invention also provides a compound of Formula I suitable for grafting ATR element, said compound being suitable for immobilizing a receptor on said ATR element,

(R⁵O)₃Si-(CH₂)_{w}-L-(CH₂CH₂O)_{z}-CH₃ I

wherein R⁵, L, w and z have the same meaning as that defined above.

The compound of Formula I when covalently grafted on the surface of the ATR element improves substantially the stability of the ATR element. The compound of Formula I can also stabilize said ATR element from hydrolysis under physiological conditions. Using compound of Formula I has the advantage of preventing the hydrolysis and degradation under physiological conditions of grafted ATR element. In the present invention, the ATR element is not grafted, nor coated, nor provided with an intermediate layer prior to the covalent grafting of the organic molecule.

The invention provides a compound suitable for the grafting of an ATR element of general formula:

In one embodiment, the compound can be of general Formula I, wherein R⁵ is a C₁₋₆alkyl, L is selected from -NHC(O)O-,-NHC(S)O-, -OC(O)NH-, -OC(S)NH-, -C(O)NH-, -C(S)NH-, -NHC(O)NH-, or -NHC(S)NH-, w is an integer selected from 1 to 5, for example 1, 2, 3, 4 or 5, and z is an integer selected from 5 to 10 for example 5, 6, 7, 8, 9 or 10. In a preferred embodiment, R⁵ is a C₁₋₆alkyl, L is selected from -NHC(O)O-,-NHC(S)O-, -OC(O)NH-, -OC(S)NH-, -C(O)NH-, -C(S)NH-, -NHC(O)NH-, or -NHC(S)NH-. In a preferred embodiment, the compound suitable for the grafting of an ATR element is (R⁵O)₃Si-(CH₂)₃-NHC(O)O-(CH₂CH₂O)₇-CH₃, wherein R⁵ is a C₁₋₆alkyl, preferably methyl, ethyl or propyl.

The present invention also provides a method for preparing a compound of Formula I suitable for the grafting of an ATR element comprising the step of: reacting a compound of formula HY²-(CH₂CH₂O)_{z}-Me with a compound of formula (R⁵O)₃Si-(CH₂)_{w}-Y¹ , Y¹ is selected from C≡CH, CH=CH₂, CN, CH=O, epoxide, halogen, SH, NH₂, OH, N=C=O, N=C=S, CO₂H or esters thereof, wherein Y² is selected from -O-, -S-, -NH-, -C(O)O-, -C(S)O-, -C(O)NH-, -C(S)NH- and z is an integer selected from 1 to 20, wherein R⁵, w and z have the same meaning as that defined above.

In a particular embodiment, said method comprises
- providing a solution of a compound of formula HY²-(CH₂CH₂O)_{z}-Me wherein Y² is selected from -O-, -S-, -NH-, -C(O)O-, -C(S)O-, -C(O)NH-, -C(S)NH- and z is an integer selected from 1 to 20,
- treating said solution with a salt,
- adding a compound of general formula (R⁵O)₃Si-(CH₂)w-Y¹ wherein R⁵ is a C₁₋₆alkyl, w is an integer selected from 1 to 10 preferably 1 to 5 and Y¹ is selected from C≡CH, CH=CH₂, CN, CH=O, epoxide, halogen, SH, NH₂, OH, N=C=O, N=C=S, CO₂H or esters thereof.

In one embodiment, for compound of formula HY²-(CH₂CH₂O)z-Me, Y² is preferably selected from -O-, -S-, -NH-, -C(O)O-, -C(S)O-, -C(O)NH-, -C(S)NH- and z is an integer selected from 5 to 10. Preferably said compound of formula HY²-(CH₂CH₂O)z-Me is HY²-(CH₂CH₂O)₇-Me.

Suitable salt for said method can be selected from NaX², KX², CsX², RbX², CaX²₂, ZnX²₂, MgX²₂ wherein X² is selected from Cl, Br, or I. Preferably, the salt can be potassium chloride. Suitable solvents for preparing the solution of compound and salt are selected from the group comprising tetrahydrofuran, diethylether, diisopropylether, dioxane, acetonitril, ethylacetate, chloroform, dichloromethane, dichloroethane, dimethylformamide and dimethylsulfoxide.

In another embodiment, for compound of formula (R⁵O)₃Si-(CH₂)w-Y¹, R⁵ is preferably a C₁₋₆alkyl, such as methyl, ethyl or propyl, w is an integer selected from 1 to 5 and Y¹ is selected from C≡CH, CH=CH₂, CN, CH=O, epoxide, halogen, SH, NH₂, OH, N=C=O, N=C=S, CO₂H or esters thereof. In a preferred embodiment, R⁵ is a C₁₋₆ alkyl, and Y¹ is selected from the group comprising C≡CH, CH=CH₂, CN, CH=O, epoxide, halogen, SH, NH₂, OH, N=C=O, N=C=S, CO₂H or esters thereof.

The invention also provides a method for manufacturing a grafted ATR element comprising the steps of:
- providing an ATR element,
- reacting at least part of the surface of said ATR element with a compound of Formula I.
   In an embodiment, said method for manufacturing a grafted ATR element comprises the step of covalently coupling photoreacting the grafted ATR element with a multifunctional arm-spacer of the general formula
   Z¹-(CH₂)ₜ-Z² or
   Z¹-CH₂-(O-CH₂-CH₂)ᵤ-OCH₂-Z²
wherein Z¹, Z², t, and u have the same meaning as that defined above.

Preferably, said covalent coupling is performed by photochemical reaction. Preferably said covalent coupling comprises the step of photoreacting the grafted ATR element with O-succinimidyl 4-(p-azidophenyl)butanoate.

In an embodiment, said method for manufacturing a grafted ATR element optionally comprises the step of fixing a receptor on the grafted ATR element.

In an embodiment, said ATR element, prior to grafting compound of formula I, is chemically activated by oxidation, hydroxylation or reduction in acid or alkaline environment. Preferably, the ATR element is a crystal made from a material selected from the group consisting of silicon, germanium, ZnS, ZnSe or diamond. Preferably, the ATR element is a crystal having a trapezoidal, hemi-cylindrical, fiber or rod shaped geometry or a rectangular or triangular polyhedral form, such as a rectangular or a triangular prism. More preferably, the ATR element is a triangular prism with a right triangle triangular basis (also called right-angled triangle or rectangled triangle). More preferably, the ATR element is a triangular prism with 45-45-90 triangle basis (right triangle with the two other angles at 45°).

The ATR element can be transparent in infrared, can be transparent in visible and/or can be transparent in ultra-violet.

The invention also provides an ATR element wherein at least part of the surface of said ATR element is covalently grafted with a compound of general Formula I.

The compound according to the invention is useful for the grafting of an ATR element.

The present invention can be further illustrated by the following examples, although it will be understood that these examples are included merely for purposes of illustration and are not intended to limit the scope of the invention unless otherwise specifically indicated.

### Examples

### Example 1 Detection of FVIII in complex media

Factor VIII (FVIII) is a large heterodimeric, multidomain plasma glycoprotein (approx. m.w.: 260 kDa), essential in the intrinsic pathway of blood coagulation. The C-terminal C2 domain of the protein is implied in binding to phospholipid membrane containing at least 5% of phosphatidylserine (PS). The binding does not occur to phospholipid membranes containing phosphatidylcholine (PC).

In this example, the absorbance of FVIII on membrane fragments on a single lane multiple reflection internal reflection element (IRE) and on a multiple lane single reflection IRE was measured and compared.

The membrane fragments were prepared by adsorption of phospholipid vesicles containing either phosphatodylcholine (PC) or phosphatidylserine (PS). For the preparation of the liposomes, aliquots of 2 mg of lipids were solubilised in chloroform, then dried under a N₂ stream for 15 min in a glass vessel and finally placed under vacuum for 12 hours to remove the last traces of the solvent. The dried lipids were then resuspended in a 2 mM Hepes buffer at a final concentration of 0.5 mg/ml. The solution was vortexed for 1 min, then sonicated for 3-5 min (Branson probe sonifier, 30 W) in order to obtain small unilamellar vesicles (SUV). The PS and PC liposomes were used at a concentration of 0.5 mg/l. The trapezoidal-shaped and the triangular shaped crystals were respectively incubated with 200 µl or 3 µl of liposome solution in the infrared cell during 6 to 10 hours at 4°C. A FTIR spectrum was recorded just after the injection of the liposomes in the infrared cell and kept as a reference spectrum to monitor the formation of the lipid film. The procedure allowed the lipid membrane to slowly and uniformly adsorbs on the OTS-grafted ATR element. At the end of the incubation, the excess of lipids was rinsed using 30 ml of buffer solution. Coagulation Factor VIII (FVIII, Octanate 500, Octapharma) at increasing concentration in 2 mM Hepes was injected in the flow cell and brough in contact with the IRE covered by the membrane fragments. Typically, the concentration ranged from 0 to 0.25 mg/ml over 120 min. The experiments were run at room temperature.

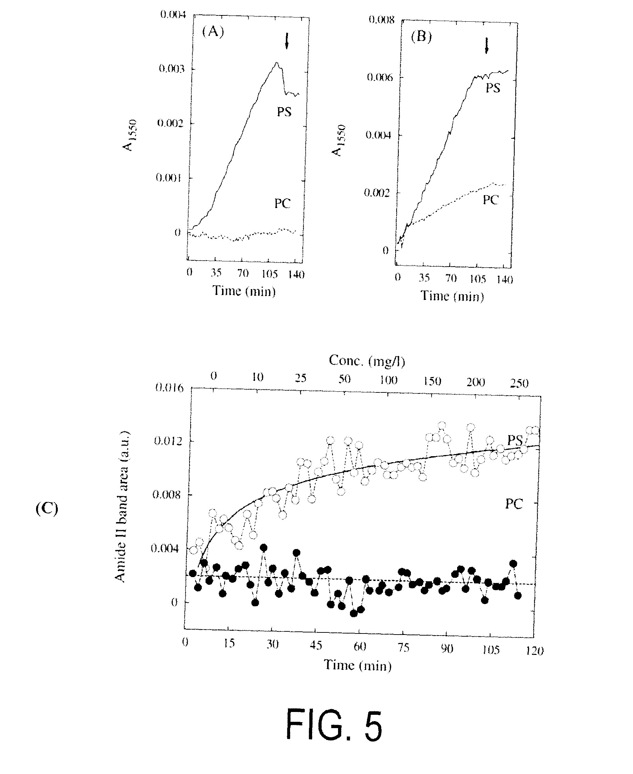

The results are shown in Figure 5 which represents graphs plotting the absorbance of FVIII on membrane fragments on a single lane multiple reflection internal reflection element (IRE) (A: silicon, B: germanium) and on a multiple lane single reflection IRE (C: germanium). Figure 5A shows the binding of FVIII on the PS containing membrane fragments and the absence of binding on the PC ones. In contrast, on a single lane IRE element made of germanium (Figure 5B), the adsorption of the membrane fragments is less uniform due the instability of the germanium interface. This results in a non-specific adsorption on the PC membrane fragments. Carrying out the experiments on a multiple lanes germanium IRE (Figure 5C) avoided this non-specific adsorption phenomenon and contributed to obtaining a better control of the IRE element/solution interface. The non-specific adsorption of FVIII on phospholipid membrane fragments (100% phosphatidylcholine [PC]) was drastically reduced (Fig. 5C) when compared to the adsorption of the multiple reflection crystal (Fig. 5B).

The use of a device according to an embodiment of the present invention allowed the IR analysis to be run on a small area. The control of the surface state of the ATR element was therefore easier. In particular, its cleaning and its functionalization by chemical compounds can be homogeneous specifically on that scale.

### Example 2

In this experiment, the device according to an embodiment of the invention is a trapezoidal shaped prism useful for multiple reflections (typically, 25). The device was supported by tightly bound plates mounted on an elevator that allows a vertical displacement of the device to be investigated in the IR beam and several lanes to the used independently.

The device was used for the analysis of three samples. Three lanes have been used on an ATR germanium crystal. Dipalmitoylphosphatidylcholine was deposited on lane 1 (at position 5 mm), lane 2 was left empty (position 10 mm) and dipalmitoylphosphatidylcholine deuterated on one chain was deposited on lane 3 (at position 15 mm). Imaging of the ATR element was obtained by collecting spectra upon moving the ATR element one millimeter at a time. The spectra recorded the absorbance as a function of the wavenumbers (cm⁻¹) and of the infrared beam position.

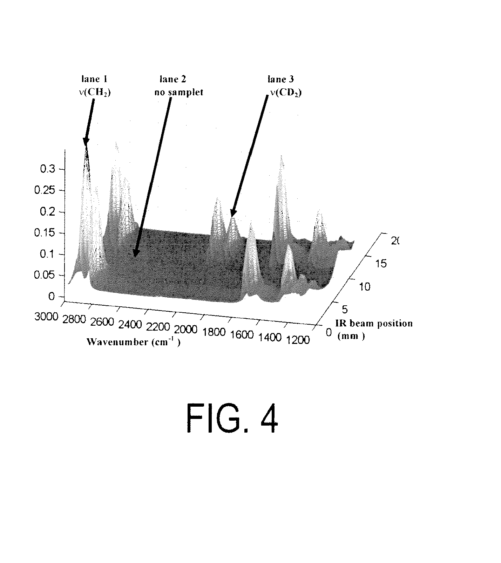

The results are shown in Figure 4. With this method, it was possible to record spectra as a function of temperature and observe phase transition in the lipids. Transmission of germanium strongly depended on temperature. The present invention allowed the recording of the adequate background for each temperature.

### Example 3: Preparation of 2,5,8,11,14, 17,20-heptaoxadocosan-22-yl-3-(triethoxysilyl)propylcarbamate (Scheme 1 : R⁵ = ethyl) :

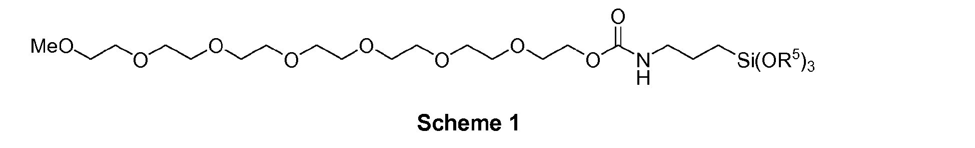

Triethyleneglycol monomethyl ether (1 g, 6.1 mmol) was dissolved in pyridine (4 mL, 49.4 mmol) and cooled at 0 °C. Mesyl chloride (0.7 mL, 0.9 mmol) was added dropwise. The mixture was stirred at 0 °C for 2 h and then left at room temperature for 20 h. After addition of 0.1 N HCl (20 mL), the product was extracted with EtOAc (3 x 25 mL). The organic layers were dried over MgSO₄, filtered and concentrated under vacuum to furnish the mesylated derivative as a yellowish oil (1.14 g, 75%); this intermediate was used in the next step without purification. ¹H NMR (300 MHz, CDCl₃): d 3.08 (s, 3H, CH₃SO₃), 3.38 (s,3H, OCH₃), 3.54 (m, 2H, CH₂OCH₃), 3.62-3.70 (m, 6H, OCH₂-CH₂O), 3.77 (m, 2H, OCH₂CH₂OSO₂),4.38 (m, 2H, OCH₂CH₂OSO₂); 13C NMR (50 MHz, CDCl₃): d 37.6 (CH₃OSO₂), 58.8 (CH₃O), 68.9(CH₂), 69.2 (CH₂), 70.4 (CH₂), 70.6 (CH₂), 71.3 (CH₂), 71.8 (CH₂); MS (Cl-CH₄) m/z: 243.4 (C₈H₁₈O₆S + 1).

Tetraethyleneglycol (2.34 g, 12.0 mmol) and 50% NaOH (0.6 mL, 7.5 mmol) were heated at 100 °C for 1 h, then toluene (2 mL) was added. The mesylated intermediate (1.5 g, 6.0 mmol) dissolved in toluene (3 mL) was added and the mixture was heated at 100 °C for 20 h. After cooling and addition of water (2.5 mL), the organic layer was separated. This organic layer was washed five times with water (4x 0.5 mL). The watery organic phase was extracted with EtOAc (4 x 5 mL), dried over MgSO₄ and concentrated under vacuum to give HO-(CH₂CH₂O)₇-Me as a yellowish oil (1.96 g, 96%). ¹H NMR (300 MHz, CDCl₃): d 3.38 (s, 3H, OCH₃), 3.55 (m, 2H, CH₂), 3.60-3.67 (m, 24H, CH₂ x 12), 3.74 (m, 2H, CH₂); ¹³C NMR (50 MHz, CDCl₃): d 58.9 (OCH₃), 61.6 (CH₂OH), 70.1, 70.4, 70.6 (broad), 71.9, 72.5, 72.9 (CH₂OCH₃); MS (APCI) m/z: 341.1 (C₁₅H₃₂O₈ + 1).

HO-(CH₂CH₂O)₇-Me (1.79 g, 5.3 mmol) was dissolved in dry THF (30 mL) and treated successively with KCI (1.14 g, 0.15 mmol) and 3-(triethoxysilyl)-propylisocyanate (1.23 mL, 5.1 mmol). The mixture was stirred vigorously at 75 °C for 45 h. After filtration and washing of the solid residue with EtOAc, the filtrate was concentrated under vacuum to give the 2,5,8,11,14,17,20-heptaoxadocosan-22-yl-3-(triethoxysilyl)propylcarbamate (3.0 g, 100%) as yellowish dense oil. ¹H NMR (300 MHz, CDCl₃): d 0.62 (br t, 2H, SiCH₂), 1.22 (t, J = 7 Hz, 9H, Si(OCH₂CH₃)₃), 1.61 (br quint, 2H, SiCH₂CH₂), 3.16 (m, 2H, CH₂NHCO₂), 3.38 (s, 3H, OCH₃), 3.55 (m, 2H, OCH₂), 3.60-3.75 (m, 26H, OCH₂ x 13), 3.82 (q, J = 7 Hz, 6H, Si(OCH₂CH₃)₃), 4.21 (br s, 1H, NHCO₂); ¹³C NMR (75 MHz, CDCl3): d 7.60 (SiCH₂), 18.54 (Si(OCH₂CH₃)₃), 23.30 (Si-CH₂CH₂), 43.44 (CH₂NHCO₂), 58.42 (Si(OCH₂CH₃)₃), 59.01 (OCH₃), 61.56 (CH₂O), 63.77 (CH₂O), 69.68 (CH₂O), 70.57 (CH₂O), 71.93 (CH₂O), 72.54 (CH₂O); IR (film) n: 3498, 3352, 2924, 2885, 1720, 1539, 1454, 1249, 1103, 1080, 953, 775 cm-1; HRMS (ESI) calcd for C₂₅H₅₃NO₁₂SiNa: 610.3235 - Found: 610.3231.

### Example 4: Grafting of an ATR element with the compound of example 3

ATR elements were 45 mm long silicon or germanium prisms with a triangular basis (basis: 4.8 mm; height: 4.8 mm).

With reference to scheme 2, the method for manufacturing a grafted ATR element according to an embodiment of the invention is illustrated and described in more details hereunder.

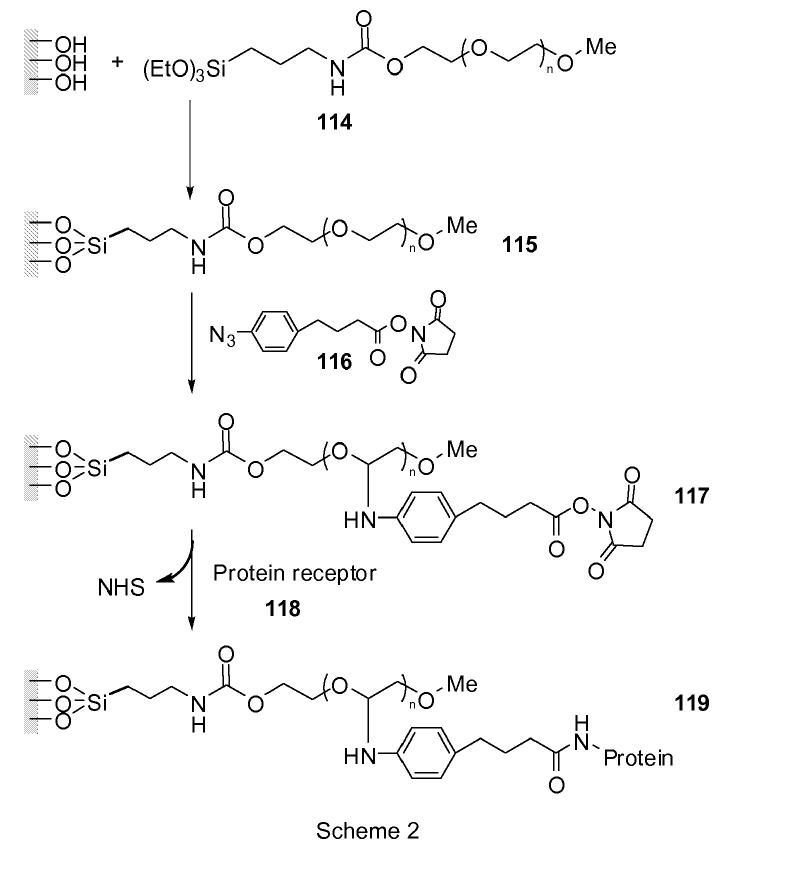

The ATR element can be either silicon or germanium and the activation of the surface was therefore adapted accordingly.

Silicon devices were washed with chloroform (2 x 5 min) under sonication, and then submitted to UV-ozone treatment (2 x 10 min, on each face). Oxidation was performed with 95% H₂SO₄ / 30% H₂O₂ (70/30, v/v) during 10 min at 110-130 °C. The devices were abundantly rinsed with MilliQ water and dried under N₂ flux (17 h).

Germanium devices were washed with 38% HNO₃ (1 min) and rinsed with MilliQ water. Oxidation was performed with 99+% oxalic acid / 35% H₂O₂ (10/90, v/v) during 5 min at 20 °C, and washing with MilliQ water. This was repeated three times. The devices were dried under N₂ flux (17 h).

The grafting protocol of silane **114** (Scheme 1 with R⁵ is ethyl) was the same for silicon or germanium surfaces. The devices were immersed into 2% silane solution in CCl₄, under N₂ atmosphere, during 3 h at reflux. The crystals were washed with methanol (2 h) and with tetrahydrofuran (2 h) in a Soxhlet apparatus providing the surface **115.**

The photografting of azide **116** on the surface **115** was performed similarly on grafted silicon and germanium devices. A solution of molecular clip **116** in benzene (5 mg / 1.5 mL) was sprayed on the device and the solvent was evaporated under air flux in the dark (deposition of 0.1 to 0.2 mg **116** / cm²). The crystal was submitted to UV irradiation during 2 h at room temperature (3 lamps of 8 W and λₘₐₓ 254 nm, placed at a distance of 10 cm). The device was rinsed with THF (10 min) and CHCl₃ (5 min) under shaking at 20 °C (Edmund Bühler stirrer, model KL-2, 150 rpm), thus providing the activated surface **117,** ready for the fixation of a receptor on the sample.

### Example 5: Chemical stability of an ATR element with compound of example 3.

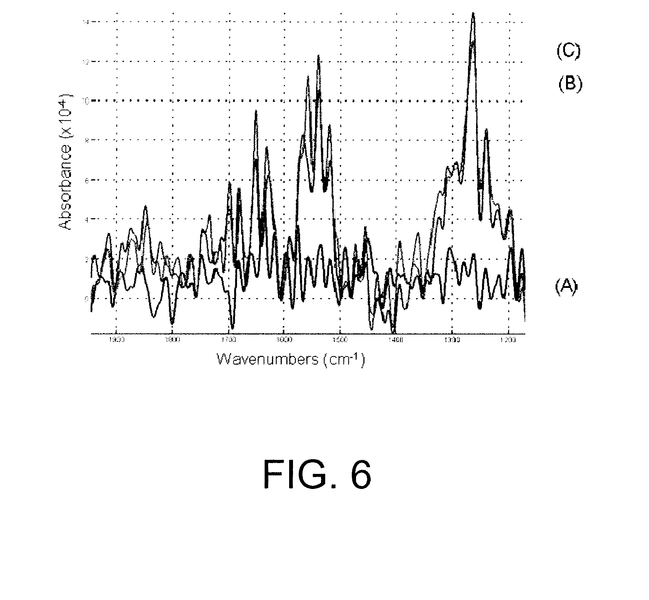

This example shows the chemical stability against hydrolysis of grafted surface **115.** The FTIR spectrum was recorded over the 1200-1900 cm⁻¹ spectral domain. Spectrum (A) is the baseline recorded on the germanium ATR element, prior to grafting with compound **114.** Spectra (B) and (C) respectively corresponded to the signals recorded on the dry crystal grafted with compound **114** before and after flowing a phosphate buffer saline (PBS) solution over the grafted surface of the ATR element during 5 hrs at room temperature. The flow rate was 20 µl/min. The results are shown in Figure 6. It can be clearly seen that there is no difference between spectra (B) and (C), i.e. before and after passing the PBS flow. Stability of the organic layer may be concluded from this example.

### Example 6

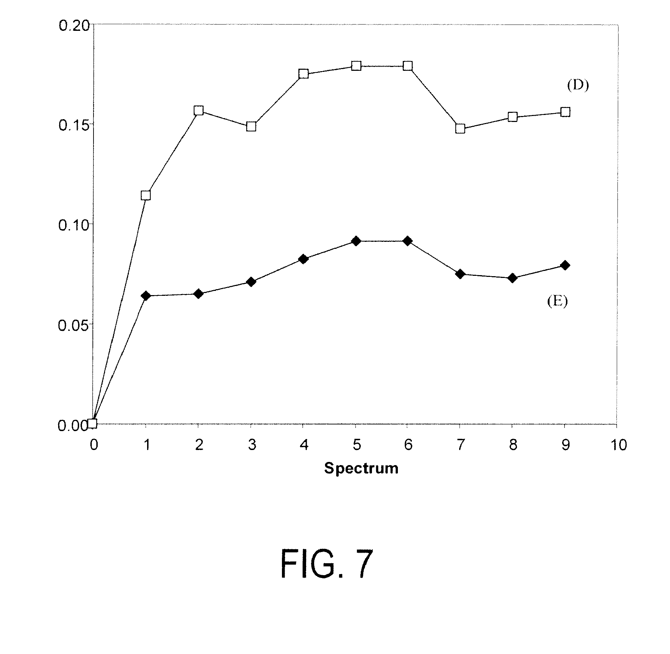

This example demonstrates the ability of the activated surface **117** to bind a receptor. BlaR-CTD, the 250 amino-acids long C-terminal domain of the BlaR1 penicillin-binding protein, was dissolved in a PBS medium at pH 8 containing 20mM of NaH₂PO₄ and NaCl 250mM. The protein concentration was 300µg/ml. A volume of 200µl was needed for the covalent binding of the receptor on the activated surface **117.** The solution containing the protein was passed over the IRE element with surface **117** for 3 hours with a discontinue flow speed of 20µl/min. Then the covalent binding was stabilized by passing the medium solution for 30 minutes with a continue flow speed of 20µl/min. A spectrum was recorded every 30 minutes during the binding and then every 10 minutes for the stabilisation. the results are shown in Figure 7 as graphs plotting the absorbance of the bound receptor . The time variations of the integrated absorbance of the amide I and amide II bands (1702-1482 cm⁻¹) are showed on said graphs. Comparison of the signal recorded on surfaces **117** (spectrum D) and **115** (control spectrum E) showed the enhanced binding of the receptor to the functionalized surface **117.**

## Claims

1. A device suitable for the investigation of ligand-receptor interactions comprising an attenuated total reflection (ATR) element, transparent in the infrared, wherein at least one surface of said ATR element is provided with a sample compartment comprising at least two chambers, wherein each chamber is in direct communication with at least part of said ATR element surface.

2. A device according to claim 1, wherein said at least part of said ATR element surface in direct communication with said chamber is chemically activated by oxidation, hydroxylation or reduction in acid or alkaline environment and covalently grafted with an organic molecule able to immobilize a receptor.

3. A device according to claims 1 or 2, wherein said sample compartment comprises from 2 to 96 chambers.

4. A device according to any of previous claims 1 to 3, wherein each chamber comprises an inlet and an outlet.

5. A device according to any of previous claims 1 to 4, wherein the ATR element is made from a material selected from the group consisting of silicon, germanium, ZnS, ZnSe, or diamond.

6. A device according to any of previous claims 1 to 5, wherein the ATR element has a trapezoidal, hemi-cylindrical, fiber or rod shaped geometry or a rectangular or triangular polyhedral form, such as a rectangular or a triangular prism..

7. A device according to any of previous claims 2 to 6, wherein the organic molecule covalently grafted on the surface of the ATR element is selected from the group comprising CH≡CR¹, CH₂=CHR¹, X₃Si-(CH₂)_{q}-(CF₂)ₛ-Y, X₂(R³)Si-(CH₂)_{q}-(CF₂)ₛ-Y ; X(R³)(R⁴)Si-(CH₂)_{q}-(CF₂)ₛ-Y ; or (R⁵O)₃Si-(CH₂)_{w}-L-(CH₂CH₂O)_{z}-CH₃
wherein
R¹ is selected from CₙH₂ₙ₊₁, CₙF₂ₙ₊₁, -(CH₂)ₘ-(O-CH₂-CH₂)ₚ-OR², wherein R² is selected from C₁₋₄alkyl, C₁₋₆alkylarylsulfoxide, heteroaryloxycarbonylC₁₋₆alkyl, 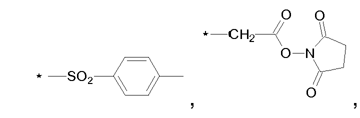 or mixture thereof,
n is an integer from 3 to 50,
m is an integer from 0 to 20,
p is an integer from 3 to 20;
X is halogen or C₁-₆alkoxy;
q is an integer selected from 1 to 20;
s is an integer selected from 0 to 20;
R³ and R⁴ are each independently C₁₋₆alkyl;
Y is selected from Me, CF₃, CHF₂, CH₂F, C≡CH, CH=CH₂, CN, CH=O, epoxide, halogen, SH, NH₂, OH, N=C=O, N=C=S, CO₂H or derived esters thereof,
R⁵ is a C₁₋₆alkyl, L is selected from -NHC(O)O-,-NHC(S)O-, -OC(O)NH-, -OC(S)NH-, - C(O)NH-, -C(S)NH-, -NHC(O)NH-, or -NHC(S)NH-, w is an integer selected from 1 to 10 and z is an integer selected from 1 to 20.

8. A device according to any of claims 1 to 7, wherein the analytical chambers are made of a material selected from the group consisting of glass or polymers selected from the group comprising polycarbonate, polypropylene, polyethylene, polyethylenetherephtalate, polymethylmetacrylate, copolymers of polyolefin, copolymers of cyclic and non cyclic olefins, copolymers of linear and cyclic olefins and mixture thereof.

9. A method for manufacturing a device according to any of claims 1 to 8 comprising the steps of :
- providing an ATR element, transparent in infrared,
- disposing on at least one surface of said ATR element a sample compartment comprising at least two chambers, and
- sealing together the ATR element and the sample compartment.

10. Use of a device according to any of claims 1 to 8 for the analysis of at least two samples.

11. Method for the analysis of at least two analytical samples by attenuated total internal reflection in FTIR configuration comprising the steps of :
(a) providing a device according to any of claims 1 to 8, comprising an ATR element, transparent in the infrared, wherein at least one surface of said ATR element is provided with a sample compartment comprising at least two chambers, wherein each chamber is in direct communication with at least part of said ATR element surface,
(b) filling each chambers with a sample to analyze,
(c) providing an infrared beam onto the surface of the ATR element in communication with the first chamber,
(d) detecting the reflected IR beam obtained,
(e) moving the device such that the surface of the ATR element in communication with the second chamber is in front of the infrared beam and repeating steps (c) to (e) until the last sample.

12. A compound of formula I suitable for the grafting of an ATR element , wherein
(R⁵O)₃Si-(CH₂)_{w}-L-(CH₂CH₂O)_{z}-CH₃ I
R⁵ is a C₁₋₆alkyl, L is selected from -NHC(O)O-, -NHC(S)O-, -OC(O)NH-, -OC(S)NH-, -C(O)NH-, -C(S)NH-, -NHC(O)NH-, or -NHC(S)NH-, w is an integer selected from 1 to 10 and z is an integer selected from 1 to 20.

13. The compound according to claim 12, wherein said compound of Formula I is (R⁵O)₃Si-(CH₂)₃-NHC(O)O-(CH₂CH₂O)₇-CH₃, wherein R⁵ is a C₁₋₆alkyl.

14. A method for preparing a compound of Formula I according to claim 12 or 13, comprising the step of: reacting a compound of formula HY²-(CH₂CH₂O)_{z}-Me with a compound of formula (R⁵O)₃Si-(CH₂)w-Y¹ ,
wherein Y² is selected from -O-, -S-, -NH-, -C(O)O-, -C(S)O-, -C(O)NH-, or -C(S)NH-, z is an integer selected from 1 to 20, R⁵ is a C₁₋₆alkyl, w is an integer selected from 1 to 5 and Y¹ is selected from C≡CH, CH=CH₂, CN, CH=O, epoxide, halogen, SH, NH₂, OH, N=C=O, N=C=S, CO₂H or esters thereof.

15. A method for manufacturing a grafted ATR element comprising the steps of:
- providing an ATR element,
- reacting at least part of the surface of said ATR element with a compound of Formula I according to claim 12 or 13.
